Europäisches Patentamt

**European Patent Office**

Office européen des brevets

(19)

(11) Veröffentlichungsnummer: **0 079 503**
**A1**

(12) # EUROPÄISCHE PATENTANMELDUNG

(21) Anmeldenummer: **82109964.5**

(22) Anmeldetag: **28.10.82**

(51) Int. Cl.³: **A 61 C 5/06**
**B 65 D 81/32**

(30) Priorität: **07.11.81 DE 3144323**

(43) Veröffentlichungstag der Anmeldung:
**25.05.83 Patentblatt 83/21**

(84) Benannte Vertragsstaaten:
**AT BE CH DE FR GB IT LI LU NL SE**

(71) Anmelder: **BAYER AG**
**Zentralbereich Patente, Marken und Lizenzen**
**D-5090 Leverkusen 1, Bayerwerk(DE)**

(72) Erfinder: **Kleissendorf, Roland, Dipl.-Ing.**
**Paffrather Strasse 291**
**D-5060 Bergisch Gladbach 2(DE)**

(72) Erfinder: **Volkmer, Klaus**
**Heimstättenweg 33**
**D-5060 Bergisch Gladbach 2(DE)**

(54) **Kapsel zum Aufbewahren und Mischen von zwei Komponenten für Dentalzwecke.**

(57) Die Kapsel besteht aus einer Ober- (1) und einer Unterkammer (2), die durch eine Folie (15) voneinander getrennt sind. Die Unterkammer (2) ist zweiteilig mit einem axial in einem Außenteil (4) verschiebbaren Innenteil (3) ausgebildet. Der Außenteil (4) ist mit einem Faltenbalg (5) versehen. Durch Zusammendrücken der Kapsel wird die Folie (15) von einer kreisförmigen Schneide (7), die im Innenteil (3) angebracht ist, durchtrennt. Beim weiteren Zusammendrücken der Kapsel rastet die Unterkammer (2) nach Art eines Schnappverschlusses (8,12) fest in die Oberkammer (1) ein. Beide Teile sind jetzt hermetisch miteinander verbunden. Das in der Kapsel befindliche Quecksilber und die Silberfeilung werden dann gründlich miteinander gemischt und zu Silberamalgam umgesetzt. Nach dem Mischvorgang wird die Kapsel zur Entnahme des Silbersmalgams geöffnet. Zu diesem Zweck ist in der Oberkammer (1) eine Sollbruchstelle vorgesehen.

FIG.1

EP 0 079 503 A1

Croydon Printing Company Ltd

BAYER AKTIENGESELLSCHAFT     5090 Leverkusen, Bayerwerk

Zentralbereich               Ki/bc/c

Patente, Marken und Lizenzen

Kapsel zum Aufbewahren und Mischen von zwei Komponenten
für Dentalzwecke

Die Erfindung betrifft eine Kapsel zum Aufbewahren und
Mischen von zwei Komponenten für Dentalzwecke mit einer
Ober- und einer Unterkammer, die durch eine Folie voneinander getrennt sind. Derartige Kapseln werden in
der Dentalmedizin zur Herstellung von Silberamalgam
für Zahnfüllungen verwendet. Zu diesem Zweck enthält
die Kapsel in ihrem oberen Teil einen Quecksilbertropfen und in ihrem unteren Teil Silber in feinverteilter Form (sog. Silberfeilung). Ober- und Unterteil sind bei den für die Einmalverwendung konzipierten neueren Kapseln durch eine Folie oder Membran voneinander getrennt. Zur Amalgamherstellung wird die
Folie entfernt oder zerstört und die Kapsel anschließend in einen handelsüblichen Vibrationsmischer gebracht, der eine intensive Durchmischung
des Quecksilbers mit der Silberfeilung in der Kapsel
gewährleistet. Dabei bildet sich Silberamalgam, das
anschließend nach dem Öffnen der Kapsel entnommen
werden kann. Eine genaue Beschreibung dieser Kapseltypen findet sich z.B. in dem US-Patent 4 182 447, in der
DE-Offenlegungsschrift 2 831 005 und der DE-Auslege-

Le A 21 373

0079503

schrift 2 324 296.

Nach dem heutigen Stand der Technik werden folgende
Anforderungen an eine Silberamalgamkapsel gestellt:

1. Aus Gründen des Arbeitsschutzes muß die Kapsel
absolut undurchlässig für Quecksilberdampf sein.
Außerdem dürfen bei der Amalgamierung keine
Quecksilberrückstände in der Kapsel verbleiben,
da die Kapselteile nach Entnahme der Amalgammasse zwar weggeworfen werden, aber in der Regel
noch längere Zeit in Abfallbehältern verbleiben
und dort eine Gefahrenquelle darstellen.

2. Die Handhabung der Kapsel bei der Amalgamherstellung und der Entnahme des Materials muß leicht
und einfach sein und nach Möglichkeit ohne zusätzliche Werkzeuge vonstatten gehen.

3. Die Konstruktion der Kapsel muß so ausgeführt
sein, daß der Amalgamierungsvorgang mit handelsüblichen Vibrationsmischern erfolgen kann (Kompatibilität).

4. Die Herstellungskosten müssen möglichst niedrig
sein. Daraus resultiert die Forderung, daß die
Kapsel mit modernen Methoden der Massenfabrikation (Spritzguß) hergestellt werden kann. Die
dazu notwendigen Formen bzw. Werkzeuge sollten
möglichst einfach sein.

Le A 21 373

5. Die Kapsel muß konfektionierungsfreundlich sein. Dies bedeutet, daß das Quecksilber und die Silberfeilung ohne komplizierte Manipulationen in die entsprechenden Kammern eingebracht werden können.

Diese Forderungen werden in ihrer Gesamtheit durch die Kapseln nach dem Stand der Technik nicht oder nicht in genügendem Maße erfüllt.

Hier setzt die Erfindung an. Es bestand die Zielsetzung, eine Kapsel zu schaffen, die den Forderungen 1. bis 5. möglichst weitgehend genügt.

Die erfindungsgemäße Problemlösung geht von einer Kapsel mit einer Ober- und einer Unterkammer aus, die durch eine Folie voneinander getrennt sind und besteht aus folgenden charakteristischen Konstruktionsmerkmalen:

a) Die Unterkammer ist zweiteilig mit einem Innen- und einem Außenteil ausgebildet.

b) Der Außenteil ist mit einem Faltenbalg versehen.

c) Der Innenteil ist axial verschiebbar im Außenteil geführt.

d) Der Innenteil weist eine kreisförmige Schneide zum Durchtrennen der Folie auf.

e) Oberkammer und Unterkammer können mittels Rasten nach Art eines Schnappverschlusses miteinander

Le A 21 373

verbunden werden.

f)    Zum Öffnen der Kapsel ist in der Oberkammer eine
      Sollbruchstelle vorgesehen.

Die neue Kapsel vereint den Vorteil einer hohen Wirtschaftlichkeit (niedrige Herstellungs- und Konfektionierungskosten) mit den strengen Anforderungen der
Arbeitsschutzbestimmungen hinsichtlich der Belastung
mit Quecksilberdämpfen. Im Gegensatz zu den bisher bekannten Kapseln bildet die erfindungsgemäße Kapsel bis zum
Zeitpunkt des Mischvorgangs ein völlig in sich abgeschlossenes System.

Im folgenden wird ein Ausführungsbeispiel der Erfindung anhand einer Zeichnung beschrieben. Die dreiteilige Kapsel besteht aus der Oberkammer 1 und der zweiteiligen Unterkammer 2. Die Unterkammer 2 setzt sich
ihrerseits aus dem zylindrischen Innenteil 3 und dem
dazu konzentrischen Außenteil 4 mit etwas größerem
Durchmesser zusammen. Das Außenteil 4 ist mit einem Faltenbalg 5 versehen. Das Innenteil 3 sitzt mit seinem
Boden auf dem Außenteil 4 auf und ist in axialer
Richtung innerhalb des Außenteiles verschiebbar.
Zu diesem Zweck ist ein ringförmiger Führungssteg
6 vorgesehen. Am oberen Ende des Innenteiles 3 sind
eine kreisförmige Schneide 7 und ein ebenfalls kreisförmiger Rastnocken 8 angeformt.

Die Oberkammer 1 besteht aus einer zylindrischen Haube
10 mit einer ringförmigen Aussparung 11, die stufenförmig hinterschnitten ist (12). An der der Unterkammer 2 gegenüberliegenden Seite ist die zylindrische
Haube abgeschrägt, so daß eine Gegenschneide 13 ge-

Le A 21 373

bildet wird. Außerdem enthält die Oberkammer eine Sollbruchstelle 14, die es gestattet, einen Teil der zylindrischen Haube 10 nach Art eines Deckels zu entfernen.
Zwischen Oberkammer 1 und Unterkammer 2 ist eine polyethylenkaschierte Aluminiumfolie 15 eingesiegelt. Im
betriebsfertigen Zustand sind die beiden Kapselhälften 1 und 2 über den Zacken 16 miteinander verschweißt.
Die Schweißung kann z.B. mittels Ultraschall erfolgen. In der Oberkammer 1 befindet sich ein Quecksilbertropfen 17, in der Unterkammer 2 Silberfeilung 18.
Durch die Folie 15 ist die Oberkammer 1 hermetisch
verschlossen, so daß kein Quecksilberdampf nach außen
dringen kann. Ebenso ist die Unterkammer 2 mit der
Silberfeilung 18 verschlossen. Als Material für die
Oberkammer 1 wird aus Gründen der Beständigkeit gegenüber Quecksilber zweckmäßig Polypropylen verwendet.
Die Unterkammer 2 kann dagegen aus Polyethylen bestehen.

Die Handhabung der Kapsel, d.i. die Herstellung einer
Silberamalgamfüllung, geht in folgender Weise vor sich:

Im ersten Schritt muß der Quecksilbertropfen 17 mit
der Silberfeilung 18 in Kontakt gebracht werden. Zu
diesem Zweck nimmt man die Kapsel zwischen zwei Finger und übt einen mäßigen Druck auf die Kapselober-
bzw. -unterseite aus. Dadurch wird der Faltenbalg 5
zusammengepreßt und das Innenteil 3 nach oben geschoben. Dabei wird die Folie 15 von den Schneiden
7 und 13 durchtrennt, so daß die Oberkammer 1 und
das Innenteil 3 in der Unterkammer 2 jetzt miteinander in Verbindung stehen. Das kreisrund ausgeschnittene Folienplättchen fällt ebenso wie der Quecksilbertropfen 17 in das Kammervolumen des Innenteiles 3 mit der darin befindlichen Silberfeilung 18. Bei weiterem Druck auf die Stirnseiten der Kapsel wird der ringförmige Nocken 8 in die Aussparung 11 eingeschoben und rastet an der Hinterschneidung 12 ein. Oberkammer 1 und Unterkammer 2 sind jetzt durch diesen Schnappverschluß (8,12) mechanisch fest miteinander verbunden. Anschließend wird die solchermaßen aktivierte Kapsel in einen Vibrationsmischer eingesetzt und intensiv geschüttelt. Aufgrund der intensiven Mischung wird die Silberfeilung 18 vollständig in Amalgam umgesetzt. Danach wird die Kapsel an der Sollbruchstelle 14 aufgebrochen. Das fertige Silberamalgam kann mit einem Spatel entnommen werden.

Die hier beschriebene Kapsel kann grundsätzlich auch für andere Zwecke, z.B. zur Herstellung von Zweikomponentenreaktionsharzen, wie sie in der Dentaltechnik üblich sind, benutzt werden. Anstelle der Silberfeilung 18 und des Quecksilbertropfens 17 sind dann die Oberkammer 1 und die Unterkammer 2 mit den beiden zu reagierenden Komponenten gefüllt. Die durch das Konstruktionsprinzip bedingte hohe Sicherheit gegenüber dem Austreten von Dämpfen gewährleistet dann eine hohe Lagerstabilität, da die Reaktionskomponenten vor dem Austrocknen weitgehend geschützt sind.

Le A 21 373

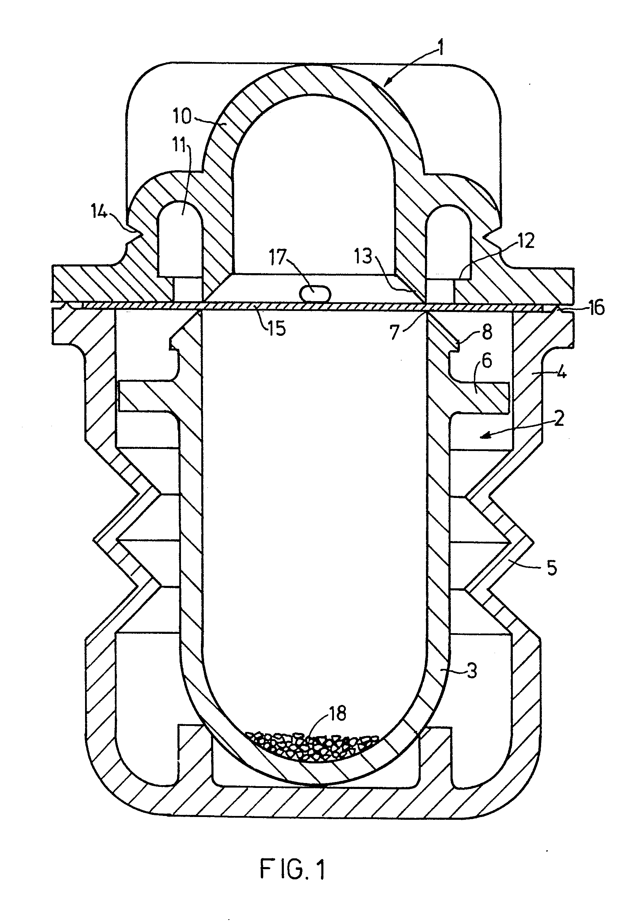

Patentanspruch

Kapsel zum Aufbewahren und Mischen von zwei Komponenten für Dentalzwecke mit einer Ober- (1) und einer Unterkammer (2), die durch eine Folie (15) voneinander getrennt sind, dadurch gekennzeichnet,

a) daß die Unterkammer (2) zweiteilig mit einem Innen- (3) und einem Außenteil (4) ausgebildet ist,

b) daß der Außenteil (4) mit einem Faltenbalg (5) versehen ist,

c) daß der Innenteil (3) axial verschiebbar im Außenteil (4) geführt ist,

d) daß der Innenteil (3) eine kreisförmige Schneide (7) zum Durchtrennen der Folie (15) aufweist,

e) daß die Oberkammer (1) und die Unterkammer (2) durch Rasten (8) nach Art eines Schnappverschlusses (8,12) miteinander verbunden werden können,

f) und daß die Oberkammer (1) eine Sollbruchstelle (14) zum Öffnen der Kapsel enthält.

Le A 21 373

FIG. 1

0079503

1/1

Europäisches
Patentamt

**EUROPÄISCHER RECHERCHENBERICHT**

**0079503**

Nummer der Anmeldung

EP  82 10 9964

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | A 61 C   5/06 |
| Y | DE-U-7 717 165   (HENKEL KGaA) | 1 | B 65 D  81/32 |
| | * Ansprüche 1, 6, 8; Figur 3 * | | |
| | --- | | |
| Y | DE-A-2 931 262   (JOHNSON & JOHNSON) | 1 | |
| | * Anspruch 6 * | | |
| | --- | | |
| A | DE-B-2 630 787   (ET DENTAIRE IVOCLAR) | 1 | |
| | * Spalte 11, Zeilen 11-21 * | | |
| | --- | | |
| A | DE-B-1 632 443   (DENTAL DESIGN SERVICE) | | |
| | --- | | RECHERCHIERTE SACHGEBIETE (Int. Cl. ³) |
| A | DE-B-2 400 970   (ET DENTAIRE IVOCLAR) | | |
| | --- | | A 61 C   5/00 |
| D,A | DE-B-2 324 296   (ESPE FABRIK PHARMAZEUTISCHER PRÄPARATE GMBH) | | A 61 J   1/00 |
| | | | B 65 D  81/00 |
| | --- | | |
| D,A | DE-A-2 831 005   (E. MÜHLBAUER KG) | | |
| | --- | | |
| D,A | US-A-4 182 447   (KAY) | | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 31-01-1983 | SIMON J J P |